# NEUE EUROPÄISCHE PATENTSCHRIFT

(11) **EP 2 118 565 B2**
(45) Veröffentlichungstag und Bekanntmachung des Hinweises auf die Entscheidung über den Einspruch: **02.10.2019**
(45) Hinweis auf die Patenterteilung: 16.11.2016
(21) Anmeldenummer: 08708015.6
(22) Anmeldetag: 21.01.2008
(51) Int. Cl.: F23C 5/06, F23C 7/00, F23C 9/00, F23D 14/22, F23D 14/32, F23N 3/00, F23N 5/00, F23N 5/02

(54) **BRENNER**
BURNER
BRÛLEUR

(30) Priorität: 02.02.2007 DE 102007005256; 08.02.2007 DE 102007006243
(43) Veröffentlichungstag der Anmeldung: 18.11.2009
(73) Patentinhaber: Messer Austria GmbH, 2352 Gumpoldskirchen (AT)
(72) Erfinder: POTESSER, Michael, A-8700 Leoben (AT)
(74) Vertreter: Münzel, Joachim R.
(86) Internationale Anmeldenummer: PCT/EP2008/050611
(87) Internationale Veröffentlichungsnummer: WO 2008/092763

(56) Entgegenhaltungen:
- DE-A1- 3 738 141
- DE-A1- 4 420 140
- JP-A- 58 069 313
- US-A- 4 547 150
- US-A- 4 628 832
- US-A- 5 199 866
- US-A- 5 199 866
- US-A- 5 217 363

## Beschreibung

Die Erfindung betrifft einen Brenner mit einer durch eine Öffnung einer Brenneraufnahme hindurch in einen Behandlungsraum einmündenden Brennerdüse, die mit wenigstens einer Brennstoffzuführung und wenigstens einer Zuführung für ein Oxidationsmittel ausgerüstet ist.

Derartige Brenner sind bekannt. So kommen bei der Befeuerung von Industrieöfen zum Erwärmen und/oder Einschmelzen von Glas, Keramik oder Metallen Brenner zum Einsatz, bei denen neben einem meist flüssigen oder gasförmigen Brennstoff Luft oder reiner Sauerstoff als Oxidationsmittel eingedüst wird. Die Brenner sind dabei in einer Brenneraufnahme montiert, beispielsweise in einem in der Wand des thermischen Behandlungsraumes angeordneten Brennerstein oder einem metallischen Brennerrohr.

Diese Brenner können in der Regel nur in einem engen Bereich der zugeführten Brennstoff- bzw. Oxidationsmittelmengen zuverlässig betrieben werden. Erfolgt die Zuführung von Brennstoff und Oxidationsmittel in den thermischen Behandlungsraum mit einer zu hohen oder zu niedrigen Geschwindigkeit, wird die Flamme instabil. Oft ist es jedoch sinnvoll, die Flammengeometrie und/oder die Brennerleistung während einer Behandlung zu verändern. So ist es beispielsweise bei Konvertern des TBCR (*"top-blown rotary converter"*) - Typs notwendig, eine veränderbare Flamme einzusetzen, da ansonsten die Gefahr besteht, dass sich der Konvertermund im Laufe der Zeit schließt. Auch beim Einschmelzen von Schrott erweist es sich als sinnvoll, die Flammenlänge während der Behandlung zu verändern, da mit fortschreitendem Schmelzprozess der Abstand zwischen dem noch zu schmelzenden Gut und dem Brenner zunimmt.

Um die Leistung von Brennern zu beeinflussen, können Brenner mit verschiedenen Oxidationsmitteln betrieben werden. Zu den Vorteilen bei der Verwendung von reinem Sauerstoff als Oxidationsmittel ist eine wesentlich erhöhte Schmelzleistung aufgrund der höheren Wärmestrahlung und aufgrund der höheren Energieeffizienz bei der Verbrennung zu zählen, weiterhin geringe NOₓ-Emissionen und geringe Abgasmengen. Vorteile von Luftbrennern sind dagegen geringere Rohstoffkosten und ein hoher Gasfluss mit inertem Stickstoff innerhalb des Behandlungsraums, der fallweise von Vorteil ist. Demzufolge empfiehlt es sich, während einer Erwärmungs- und/oder Einschmelzphase, beispielsweise von Metallen oder Glas, den hohen thermischen Wirkungsgrad von Brennstoff-Sauerstoff-Brennern zu nutzen. Demgegenüber ist in der anschließenden Warmhaltephase, in der nur eine relativ geringe thermische Leistung erforderlich ist, eine Befeuerung des Behandlungskammer mit Brennstoff-Luft-Brennern von Vorteil. Üblicherweise werden daher Brenner verschiednen Typs in einer Behandlungsanlage eingesetzt.

Um die Vorteile beider Betriebsarten nutzen zu können, wurden bereits Brenner beschrieben, bei denen während des Einsatzes zwischen Sauerstoff-Brennstoff-Betrieb und Luft-Brennstoff-Betrieb umgeschaltet werden kann. So ist aus der DE 100 46 569 A1 ein Brenner bekannt, bei denen eine zentrale Zuleitung für Brennstoff und - koaxial dazu sowie zueinander - Zuleitungen für zwei Oxidationsmittel, nämlich eine Zuleitung für reinen Sauerstoff und eine Zuleitung für Luft, vorgesehen ist. Durch Zu- und Abschalten der jeweiligen Oxidationsmittelleitung kann nach Belieben vom Sauerstoffbetrieb in den Luftbetrieb umgeschaltet werden, ohne dass es verschiedener, für das jeweilige Oxidationsmittel spezifizierter Brenner bedarf. Nachteilig bei diesem bekannten Sauerstoff-Luft-Brenner ist jedoch, dass aufgrund der nicht veränderbaren Brennergeometrie sehr unterschiedliche Ausströmgeschwindigkeiten des Oxidationsmittels bei Einsatz von Luft bzw. Sauerstoff realisiert werden müssen. Da durch die Ausströmgeschwindigkeit Stabilität und Geometrie der Flamme maßgeblich beeinflusst wird, kann der Brenner nur in einem sehr begrenzten Bereich des Verhältnisses aus Luft zu Sauerstoff stabil bzw. für die jeweilige Behandlung optimal gefahren werden.

Aus der DE 101 56 376 A1 ist ein Brenner bekannt, der sowohl mit reinem Sauerstoff, mit Luft als auch mit Luft und Sauerstoff im Mischbetrieb gefahren werden kann. Bei diesem Gegenstand ist ein Sauerstoff-Brenner in einer Luftzuführung aufgenommen, der zugleich ein einstellbarer Drallerzeuger, vorzugsweise vom "Movable Block" - Typ, vorgeschaltet ist. Neben der Einstellbarkeit der Impulsströme von Brennstoff, Sauerstoff und Luft kann und muss mit diesem Brenner zusätzlich der Drallstärke zwischen S=0 (kein Drall) und S=2 (überkritischer Drall) eingestellt werden. Durch die variable Drallstärke der Luft kann die Flammenlänge und -form sowie der Regelbereich verändert und so die Flamme zumindest in einem weiten Bereich unterschiedlicher Mischungsverhältnisse von Luft und Sauerstoff stabilisiert werden. Dies gelingt jedoch umso unvollständiger, je geringer der Sauerstoffanteil im Oxidationsmittel ist. In diesem Falle muss die Strömungsgeschwindigkeit in den Oxidationsmittelzuleitungen erhöht werden, um den höheren Anteil an unverbrennbaren Gasen auszugleichen, was jedoch oberhalb einer gewissen Grenze zur Instabilität der Flamme führt. Aus der US 5 217 363 ist ein Brenner mit den Merkmalen des Oberbegriffs des Anspruchs 1 bekannt.

Aufgabe der Erfindung ist daher, einen Brenner zu schaffen, der eine kontinuierliche Verstellbarkeit des Sauerstoffanteils des zugeführten Oxidationsmittels bei gleichzeitig hoher Stabilität der Flamme bzw. der thermischen Verhältnisse im Behandlungsraum erlaubt und bei dem die Geometrie der Flamme im Behandlungsraum und die Leistung des Brenners in einem weiten Bereich unabhängig voneinander eingestellt werden kann. Die Zuführung für das Oxidationsmittel ist mit Mitteln zum Verändern Strömungsquerschnitts der Zuführung ausgerüstet.

Gelöst ist diese Aufgabe bei einem Brenner der eingangs genannten Art und Zweckbestimmung durch einen Brenner mit den Merkmalen des Patentanspruchs 1

Der Zufluss wird durch die Oxidationsmittelzuführung durch eine Veränderung ihres freien Strömungsquerschnitts beeinflusst. Damit kann der Volumenstrom durch die Oxidationsmittelleitung erhöht oder gesenkt werden, ohne dass dazu notwendigerweise auch die Strömungsgeschwindigkeit in der betreffenden Oxidationsmittelzuführung verändert wird. Wird der Oxidationsmittelzuführung ein in seiner Zusammensetzung veränderliches Gemisch aus Luft und Sauerstoff zugeführt, kann somit, auch bei laufender Verminderung des Sauerstoffanteils im Oxidationsmittel, etwa bei einer allmählichen Umstellung von der Betriebsart "reiner Sauerstoff" auf die Betriebsart "Luft" und der damit verbundenen Reduzierung des Sauerstoffgehalts von nahezu 100% auf 20%, darauf verzichtet werden, die Austrittsgeschwindigkeit des Oxidationsmittels bei gleich bleibender Brennerleistung stark zu erhöhen. Dadurch wird insbesondere die Ausbildung einer stabilen Flamme bzw. stabiler Verbrennungsverhältnisse im Behandlungsraum auch bei unterschiedlichen Sauerstoffkonzentrationen im Oxidationsmittel gewährleistet. Eine Dralleinstellung ist zur Flammenstabilisierung beim erfindungsgemäßen Brenner nicht erforderlich, kann jedoch zusätzlich vorgesehen sein.

Die Erfindung sieht vor, dass die Brennerdüse mit wenigstens einer Zuführung für primäres Oxidationsmittel und wenigstens einer Zuführung für ein sekundäres Oxidationsmittel ausgerüstet ist, wobei zumindest die Zuführung für sekundäres Oxidationsmittel mit Mitteln zum Verändern des Strömungsquerschnitts ausgerüstet ist. Dabei trägt das primäre Oxidationsmittel die Grundlast für die Verbrennung. Die Menge des sekundären Oxidationsmittels kann dementsprechend insbesondere in Abhängigkeit vom Verhältnis aus Luft und Sauerstoff verändert werden. Primäres und sekundäres Oxidationsmittel können dabei eine unterschiedliche oder aber auch die gleiche chemische Zusammensetzung haben. Beispielsweise kann es sich bei einem der Oxidationsmittel um Luft, beim anderen um Sauerstoff handeln.

Bevorzugt ist der Strömungsquerschnitt wenigstens einer Zuführung für ein Oxidationsmittel kontinuierlich veränderbar und ermöglicht damit eine stufenlose Einstellung des Zustroms an Oxidationsmittel, insbesondere bei kontinuierlicher Veränderung des insgesamt zugeführten Sauerstoffanteils.

Die Erfindung sieht vor, dass die Brennerdüse axial verschiebbar gegenüber der Brenneraufnahme ausgebildet ist. Mit "Brenneraufnahme" ist beispielsweise ein Brennerstein oder der Metallmantel eines Brennerrohrs gemeint. Durch die Verschiebung der Brennerdüse verändern sich Geometrie der Flamme und die Strömungsverhältnisse im Behandlungsraum. Durch die Verschiebbarkeit der Brennerdüse gegenüber dem Brennerstein bzw. dem Metallmantel des Brennerrohrs wird somit ein zusätzlicher Parameter gewonnen, um die Verhältnisse im Behandlungsraum zu optimieren.

Beim erfindungsgemäßen Brenner wird durch einen mit der axialen Bewegung wirkverbundenen Schließmechanismus bzw. wenigstens eine Zuführung für Oxidationsmittel geöffnet und/oder geschlossen. Der freie Strömungsquerschnitt der Oxidationsmittelzuführung wird also durch die axiale Verschiebung der Brennerdüse gesteuert.

Eine besonders bevorzugte Ausführungsform wird dabei durch den folgenden Aufbau realisiert: Die axial verschiebbare Brennerdüse ist mit einem Brennerkopf ausgerüstet, der an seiner dem Behandlungsraum zugewandten Seite konisch zugeformt ist. Zu diesem konisch zugeformten Brennerkopf korrespondiert eine Ausnehmung in der Brenneraufnahme, die gleichfalls konisch ausgebildet ist und zwar derart, dass sich bei axialer Verschiebung der Brennerdüse zwischen Brennerkopf und der konischen Ausnehmung in der Brenneraufnahme ein Ringspalt öffnet, erweitert und/oder schließt. Der Ringspalt ist im Strömungsweg der Zuführung für sekundäres Oxidationsmittel integriert. Dadurch gelingt es, den Strom des sekundären Oxidationsmittels insbesondere durch die Variation des Ringspaltdurchmessers zu steuern. Anstelle der Konizität der beiden korrespondierenden Teile können freilich auch andere Geometrien gewählt werden; im Hinblick auf ein möglichst reibungsfreies Ausströmen erweist sich eine konische Zuformung als vorteilhaft. Der Begriff "konisch" ist hier sehr allgemein zu verstehen und umfasst auch Ausführungsformen, die von einem streng dreieckigen Längsschnitt abweichen.

Erfindungsmäßig ist die wenigstens eine Zuführung für primäres Oxidationsmittel mit einer Zuleitung für Sauerstoff und mit einer Luftzuleitung strömungsverbunden. Es findet zunächst eine Vermischung von Luft und Sauerstoff zu einem Gasgemisch statt, das anschließend in die eine Zuführung bzw. in mehrere oder alle der Zuführungen für Oxidationsmittel eingeleitet wird.

Um insbesondere eine flammenlose Verbrennung mit außen zirkulierendem Verbrennungsgas zu ermöglichen, ist es vorteilhaft, dass die Luftzuleitung mit dem Innenraum des Behandlungsraums strömungsverbunden ist, sodass ein Teil des Abgases über eine entsprechende Rückleitung in die Luftzuleitung eingespeist werden kann. Zusätzlich zu dem für die Verbrennung benötigten Sauerstoff wird so Abgas aus dem Behandlungsraum rezirkuliert. Dadurch wird die Temperatur in der Verbrennungs- bzw. Reaktionszone gesenkt und gleichzeitig eine gleichmäßigere Temperaturverteilung im Behandlungsraum bewirkt.

Eine besonders wartungsfreundliche Ausgestaltung des erfindungsgemäßen Brenners sieht vor, dass die Zuleitung für Sauerstoff und die Zuleitung für Luft in eine Mischkammer einmünden, die mit der/den Zuführung/en für primäres Oxidationsmittel und/oder mit der/den Zuführung/en für sekundäres Oxidationsmittel strömungsverbunden ist. Sauerstoff und Luft werden somit zu einem homogenen Gasgemisch vermischt und anschließend der bzw. den Oxidationsmittelzuführung/en zugeleitet.

Zweckmäßigerweise ist der Brennerdüse eine Regelungsautomatik zugeordnet, mittels der die Zufuhr an Luft und/oder Sauerstoff und/oder von Brennstoff in Abhängigkeit von einem oder mehreren physikalischen Parametern im Behandlungsraum einstellbar ist. Als Parameter wird dabei beispielsweise die Temperatur im Behandlungsraum, die Temperatur der Ofenwand, die Sauerstoffkonzentration des zugeführten Oxidationsmittels, eine Schadstoffkonzentration im Abgas, beispielsweise NOₓ, oder der Zustand eines aufzuschmelzenden Materials erfasst und aus den erfassten Daten nach einem vorgegebenem, errechneten oder empirisch ermittelten Programm die benötigte Sauerstoffzufuhr eingestellt.

Eine vorteilhafte Weiterbildung der Erfindung sieht vor, dass wenigstens zwei oder mehr Brennstoffzuführungen vorgesehen sind, die mit unabhängig voneinander ansteuerbaren Brennstoff-Zuleitungen strömungsverbunden sind. Neben der Oxidationsmittelzufuhr wird somit auch der Zufluss von Brennstoff durch Zu- bzw. Abschalten einer oder mehrerer der Brennstoffzuleitungen beeinflusst. Damit kann der Volumenstrom durch die Brennstoffzuleitungen erhöht werden, ohne dazu notwendigerweise auch die Strömungsgeschwindigkeit zu vergrößern. Auch bei einem Wechsel des Oxidationsmittels von Luft zu reinem Sauerstoff oder umgekehrt kann der Brennstoffstrom flexibel angepasst werden, ohne die Ausströmgeschwindigkeit und damit die Flammenstabilität zu beeinträchtigen. Beim Erfordernis geringer Leistung bzw. kurzer Flamme erfolgt die Zuführung von Brennstoff lediglich durch eine der Brennstoffzuführungen, bei höherer Leistungsanforderung werden sukzessive zwei oder mehr Brennstoffleitungen mit Brennstoff beschickt. Eine Dralleinstellung ist beim erfindungsgemäßen Brenner zur Flammenstabilisierung nicht erforderlich, kann gleichwohl zusätzlich vorgesehen sein.

Die Brennstoffzuführungen weisen vorteilhafterweise unterschiedliche Strömungsquerschnitte auf. Je nach Bedarf können also unterschiedliche Brennstoffzuführungen angesteuert werden und damit unterschiedliche Mengen von Brennstoff bei gleicher Ausströmgeschwindigkeit in den Behandlungsraum eingetragen werden.

Zweckmäßigerweise ist den Zuleitungen für Brennstoff und den Mitteln zum Verändern des Strömungsquerschnitts der Zuführung für Oxidationsmittel eine Regelungsautomatik zugeordnet, mittels der die Zufuhr an Brennstoff und Oxidationsmittel in Abhängigkeit von einem oder mehreren physikalischen oder chemischen Parametern im Behandlungsraum einstellbar ist. Als Parameter wird dabei beispielsweise die Temperatur im Behandlungsraum, die Temperatur der Ofenwand, der Abstand zwischen Brennermund und einem aufzuschmelzenden Material, die Sauerstoffkonzentration des zugeführten Oxidationsmittels, eine Schadstoffkonzentration im Abgas, beispielsweise NOₓ, erfasst und aus den erfassten Daten nach einem vorgegebenem, errechneten oder empirisch ermittelten Programm die benötigte Sauerstoffzufuhr eingestellt.

Die erfindungsgemäße Aufgabe wird auch durch ein Verfahren mit den Merkmalen des Anspruchs 9 gelöst.

Bei einem Verfahren zum Einleiten von Brenngasen in einen Behandlungsraum, bei dem ein Brennstoff durch eine Brennstoffzuführung und ein Oxidationsmittel durch wenigstens eine Oxidationsmittelzuführung hindurch in den Behandlungsraum eingebracht wird, wird dabei als Oxidationsmittel Sauerstoff und Luft in einem vorgegebenen oder während des Einleitens sich veränderndem Verhältnis eingesetzt, die zu einem Gasgemisch vermischt werden, das in die wenigstens eine Zuführung Oxidationsmittel eingeleitet wird, wobei in Abhängigkeit von dem Verhältnis aus Luft und Sauerstoff die Menge des eingeleiteten Oxidationsmittels durch Änderung des freien Strömungsquerschnitts der wenigstens einen Zuführung für Oxidationsmittel geändert wird. Die Änderung des Strömungsquerschnitts ermöglicht den Zustrom unterschiedlicher Gasvolumina bei gleich bleibender oder nur wenig veränderter Ausströmgeschwindigkeit. Dadurch wird insbesondere unterschiedlichen Sauerstoffkonzentrationen des Oxidationsmittels bei unterschiedlichen Mischungsverhältnissen von Sauerstoff und Luft Rechnung getragen. Das erfindungsgemäße Verfahren, bei dem vorzugsweise der erfindungsgemäße Brenner zum Einsatz kommt, ermöglicht es, Sauerstoff und Luft in einem beliebigen Verhältnis zueinander, also mit einem Sauerstoffanteil zwischen 20% und 100% in den Behandlungsraum einzutragen und dennoch eine stabile Verbrennung im Behandlungsraum aufrecht zu erhalten.

In einer abermals vorteilhaften Weiterbildung des erfindungsgemäßen Verfahrens wird ein Brennstoff durch eine erste und wenigstens eine zweite Brennstoffzuführung und ein Oxidationsmittel durch wenigstens eine Oxidationsmittelzuführung hindurch in den Behandlungsraum eingebracht. Parameter der sich im Behandlungsraum ausbildenden Flamme, wie Flammengeometrie und Temperatur im Behandlungsraum, dadurch verändert werden, dass durch Ansteuern der Brennstoffzuleitungen die Menge des zugeführten Brennstoffs und durch Änderung des freien Strömungsquerschnitts der Oxidationsmittelzuführung die Menge des zugeführten Oxidationsmittels geändert wird.

Neben der Änderung des Strömungsquerschnitts der Oxidationsmittelzuleitung, die den Zustrom unterschiedlicher Gasvolumina bei gleich bleibender oder nur wenig veränderter Ausströmgeschwindigkeit erlaubt, ermöglichen die mehreren Brennstoffzuführungen die Variation des Brennstoffzustroms, ohne dass zugleich eine Änderung der Strömungsgeschwindigkeit erforderlich ist, indem einzelne oder mehrere Brennstoffzuführungen zu- oder abgeschaltet werden. Durch das erfindungsgemäße Verfahren ist es somit möglich, verschiedene Brennparameter, wie Brennerleistung, Temperatur im Brennraum oder Flammengeometrie in einem weiten Bereich zuverlässig und stabil einzustellen.

In einer Weiterbildung der Erfindung wird durch gleichzeitiges Verändern der Austrittsgeschwindigkeiten des Oxidationsmittels und des Brennstoffs die Flammengeometrie beeinflusst. Hierdurch ist ein zusätzlicher Parameter gegeben, um die Flammengeometrie gezielt beeinflussen zu können.

Bevorzugt erfolgt dabei im Behandlungsraum eine flammenlose oder gestufte Verbrennung. Bei der "flammenlosen Verbrennung", die auch als "milde" oder "verdünnte" Verbrennung bezeichnet wird, rezirkuliert das Ofengas im Behandlungsraum und bewirkt eine insgesamt gleichmäßigere Temperaturverteilung im Behandlungsraum bei einer gleichzeitig reduzierten Temperatur im Bereich der Brennerdüse. Die flammenlose Verbrennung ermöglicht gegenüber einer Verbrennung mit Flamme eine deutliche Reduzierung der NOₓ-Werte. Das Prinzip der flammenlosen Verbrennung ist an sich bekannt und wird beispielsweise in der EP 0 463 218 A1 beschrieben.

Anhand der Zeichnungen soll ein Ausführungsbeispiel der Erfindung näher erläutert werden. In schematischen Ansichten zeigen:
- Fig .1:: Eine erste Ausführungsform eines erfindungsgemäßen Brenners in einer ersten Stellposition in einem Längsschnitt und
- Fig. 2:: Den Brenner aus Fig. 1 in einer zweiten Stellposition mit geschlossenem Ringspalt.
- Fig.3:: Eine zweite Ausführungsform eines Brenners in einer ersten Stellposition in einem Längsschnitt, nicht im Rahmen der Erfindung,
- Fig. 4:: Den Brenner aus Fig. 3 in einer zweiten Stellposition im Längsschnitt.

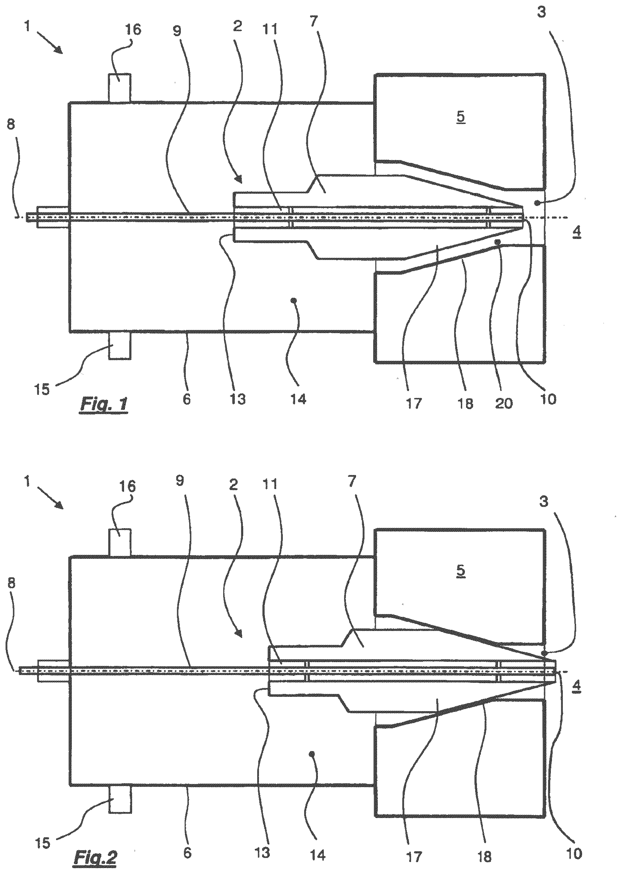

In den Fig. 1 und Fig. 2 sind gleiche Merkmale mit jeweils gleichen Bezugsziffern versehen. Der in den Zeichnungen dargestellte Brenner 1 umfasst eine Brennerdüse 2, die durch die Öffnung 3 eines in die Wandung eines metallurgischen Behandlungsraums 4 eingelassenen Brennersteins 5 einmündet. Alternativ oder ergänzend zum Brennerstein 5 kann die Brennerdüse 2 beispielsweise auch im Metallmantel eines Brennerrohrs angeordnet sein, das in den Behandlungsraum einmündet. Ohne Beschränkung der Allgemeinheit wird im Folgenden die Anordnung der Brennerdüse 2 in einem Brennerstein 5 näher betrachtet. Die Brennerdüse 2 ist in einem Brennergehäuse 6 angeordnet, das fest und zumindest weitgehend gasdicht mit dem Brennerstein 5 verbunden ist. Die Brennerdüse 2 ist axial verschiebbar im Brennergehäuse 6 aufgenommen, wobei die Verschiebung der Brennerdüse 2 in hier nicht gezeigter Weise entweder mittels eines Stellmotors oder mechanisch, etwa über ein Handstellrad, oder hydraulisch oder pneumatisch, erfolgt.

Die Brennerdüse 2 umfasst einen Brennerkopf 7, der von hier nicht gezeigten Halterungen auf einer Achse 8 koaxial zur kreiszylinderförmigen Öffnung 3 des Brennersteins 5 gehalten wird. Zentral durch den Brennerkopf 7 und das Brennergehäuse 6 hindurch erstreckt sich eine Brennstoffzuführung 9, die an ihrem vom Düsenaustritt 10 entgegen gesetzten Ende in hier nicht gezeigter Weise an eine Zuleitung für gasförmigen oder flüssigen Brennstoff angeschlossen ist. Koaxial zur Brennstoffzuführung 9 erstreckt sich durch den Brennerkopf 7 hindurch eine Zuführung 11 für primäres Oxidationsmittel, die gleichfalls am Düsenaustritt 10 ausmündet. An der vom Düsenaustritt 10 entgegen gesetzten Stirnseite 13 des Brennerkopfs 7 mündet die Zuführung 11 dagegen in den Innenraum 14 des Brennergehäuses 6 ein.

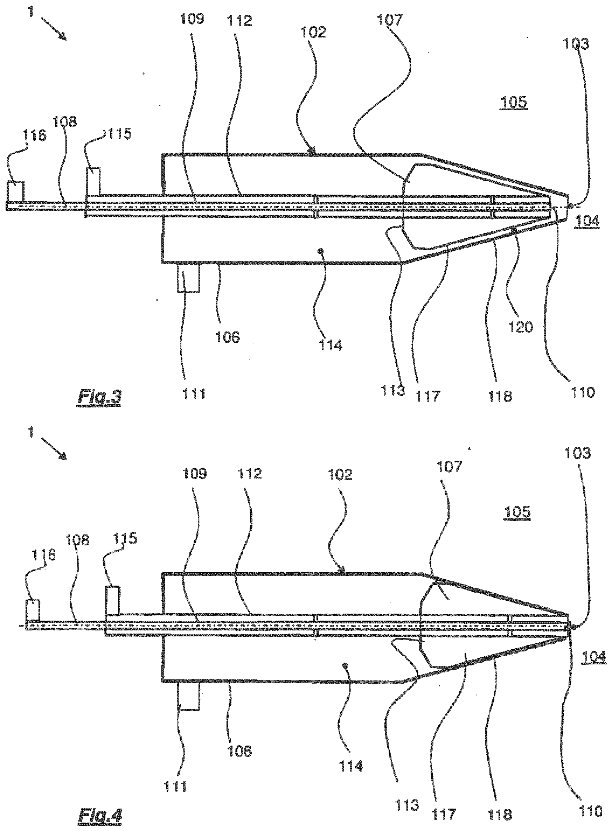

Das Brennergehäuse 6 ist mit mehreren, im Ausführungsbeispiel mit zwei, Zuleitungen 15, 16 für Oxidationsmittel ausgerüstet. Bei den Zuführungen, die als Flansch oder als Verschraubung ausgestaltet sein können, handelt es sich im Ausführungsbeispiel um eine Zuleitung 15 für Sauerstoff und eine Zuleitung 16 für Luft. Selbstverständlich können im Rahmen der Erfindung durch die Zuleitungen 15, 16 auf andere Oxidationsmittel, insbesondere Oxidationsmittel mit verschieden großen Sauerstoffanteilen, in den Innenraum 14 des Brennergehäuses 6 eingeleitet werden. Der Zustrom an Sauerstoff bzw. Luft durch die Zuleitungen 15, 16 kann mittels hier nicht gezeigter Armaturen unabhängig voneinander eingestellt bzw. geregelt werden. Im Ausführungsbeispiel münden also beide Zuleitungen 15, 16 für Luft und Sauerstoff in den Innenraum 14 ein; der Innenraum 14 fungiert dadurch als Mischkammer, in der sich Luft und Sauerstoff zu einem homogenen Gasgemisch vermengen, dessen Sauerstoffgehalt durch die Mengen des zugeführten Sauerstoff bzw. der zugeführten Luft bestimmt wird. Es ist jedoch auch möglich, die Zuleitung 15 für Sauerstoff über eine eigene Leitung mit der Zuführung 11 für primäres Oxidationsmittel oder mit der Zuführung für sekundäres Oxidationsmittel zu verbinden und somit die Gasströme von Sauerstoff und Luft bis zum Düsenaustritt 10 hin voneinander getrennt zu halten. Es ist weiterhin vorstellbar, dass gar keine Zuführung 11 für primäres Oxidationsmittel vorhanden ist und die gesamte Oxidationsmittelzuführung über die Zuführung erfolgt. Auch können anstelle der einen Brennstoffzuführung 9 mehrere, beispielsweise koaxial angeordnete Brennstoffzuführungen, wie weiter unten im zweiten Ausführungsbeispiel (Fig. 3, Fig. 4) beschrieben. Diese Ausführungsheispiele sind uber nicht im Rahmen der Erfindung.

An seiner zum Düsenaustritt 10 weisenden Stirnseite weist der Brennerkopf 7 einen konisch zugeformten Vorderabschnitt 17 auf. Mit gleichem Winkelmaß wie der konische Vorderabschnitt 17 des Brennerkopfs 7 erstreckt sich im Brennerstein 5 (bzw. im Falle eines die Brennerdüse 2 umgebenden Brennerrohres in deren Metallmantel), koaxial zur Öffnung 3 eine gleichfalls konisch ausgebildete Ausnehmung 18. In der in Fig. 1 gezeigten Stellposition ist die Brennerdüse 2 beabstandet vom Brennerstein 5 bzw. dem Metallmantel angeordnet, wobei sich zwischen dem konischen Vorderabschnitt 17 des Brennerkopfs 7 und der konischen Ausnehmung 18 im Brennerstein 5 ein Ringspalt 20 erstreckt. Der Ringspalt 20 ist mit dem Innenraum 14 des Brennergehäuses 6 strömungsverbunden und ermöglicht so die Zufuhr von Oxidationsmittel aus dem Innenraum 14 als sekundäres Oxidationsmittel.

In der in Fig. 2 gezeigten Stellposition ist die Brennerdüse 2 mit dem konischen Vorderabschnitt 17 in die konische Ausnehmung 18 des Brennersteins 5 hinein verfahren, und der Ringspalt 20 ist geschlossen. In dieser Stellposition erfolgt dir Zuführung von Oxidationsmittel ausschließlich über die Zuführung 11 für primäres Oxidationsmittel.

Bei Verwendung eines Stellmotors zur Bewegung der Brennerdüse 2 kann dieser auch mit einer hier nicht gezeigten Regelautomatik in Datenverbindung stehen, die den Vorschub der Brennerdüse 2 in Abhängigkeit von bestimmten gemessenen Parametern, beispielsweise der Temperatur oder der Konzentration von bestimmten Gasen im Behandlungsraum 4 oder dem Zustand eines im Behandlungsraum 4 vorliegenden Behandlungsguts, regelt.

Beim Betrieb des Brenners 1 wird über die Brennstoffzuführung 9 ein flüssiger oder gasförmiger Brennstoff, beispielsweise Erdgas, in den Behandlungsraum 4 eingeleitet. Wird der Brenner 1 als reiner Sauerstoffbrenner betrieben, befindet sich der Brenner in der Stellposition, wie sie in Fig. 2 gezeigt ist. Der als Oxidationsmittel zum Einsatz kommende Sauerstoff wird über die Zuleitung 15 für Sauerstoff in den Innenraum 14 eingeleitet und gelangt von dort über die Zuführung 11 für primäres Oxidationsmittel in den Behandlungsraum 4. Die Zuleitung 16 für Luft ist währenddessen geschlossen. In dieser Betriebsart als reiner Sauerstoffbrenner besitzt der Brenner 1 eine hohe Schmelzleistung bei gleichzeitig geringen Abgasmengen.

Wird im Verlauf der Behandlung die Umstellung auf gemischten Luft-SauerstoffBetrieb oder Luftbetrieb gewünscht, beispielsweise nach Abschluss eines Aufschmelzprozesses und Beginn einer Warmhaltephase, wird Luft über die Zuleitung 16 in den Innenraum 14 eingeleitet; gleichzeitig wird die Zufuhr der Sauerstoffmenge über die Zuleitung 15 entsprechend den stöchiometrischen Verhältnisse gedrosselt. Soll die über die in den Behandlungsraum 4 eingebrachte Brennstoffmenge definierte Leistung des Brenners 1 konstant gehalten werden, muss infolge des hohen Stickstoffanteils der Luft eine entsprechend größere Volumenmenge zugeführt werden. Hierzu wird die Brennerdüse 2 in Richtung vom Brennerstein 5 weg bewegt, beispielsweise in die in Fig. 1 gezeigte Position, wobei sich der Ringspalt 20 öffnet. Durch den vergrößerten Austrittsquerschnitt kann nun ein höheres Oxidationsmittelvolumen in den Behandlungsraum 4 eingebracht werden, ohne dass die Austrittsgeschwindigkeit des Oxidationsmittels am Düsenaustritt 10 wesentlich erhöht werden muss. Je geringer der Sauerstoffanteil im Oxidationsmittel ist, desto größer wird der Austrittsquerschnitt des Ringspalts 18 gewählt, d.h. desto weiter befindet sich der konische Vorderabschnitt 17 von der konischen Ausnehmung 18 des Brennersteins 5 entfernt. Auf diese Weise wird der freie Strömungsquerschnitt durch den Ringspalt 18 kontinuierlich verändert und kann so den jeweiligen Erfordernissen angepasst werden. Dadurch werden im Innern des Behandlungsraumes 4 stabile Verbrennungsverhältnisse gewährleistet.

In der Betriebsart als Luftbrenner ist der Brenner 1 besonders zum Einsatz bei flammenloser Verbrennung im Behandlungsraum 4 geeignet. Die flammenlose Verbrennung im Behandlungsraum führt zu einer Erniedrigung der Temperaturen im Bereich des Düsenaustritts 10 und insgesamt zu einer Erniedrigung der NOₓ-Werte im Abgas. Hierzu kann die Zuleitung 16 für Luft auch mit dem Behandlungsraum 4 in Strömungsverbindung stehen, so dass während der Behandlung laufend Abgas aus dem Behandlungsraum 4 entnommen und über die Zuleitung 15 wieder in den Behandlungsraum 4 eingespeist werden kann (so genannte "äußere Rezirkulation").

Auch beim Ausführungsbeispiel nach Flg. 3 und Fig. 4 (nicht im Rahmen der Erfindung) sind gleiche Merkmale mit jeweils gleichen Bezugsziffern versehen. Der in diesen Zeichnungen dargestellte Brenner 100 umfasst eine Brennerdüse 102, die mit ihrer Mündung 103, durch eine vorgegebene Öffnung eines Brennersteins 105 oder dem Metallmantel eines Brennerrohres hindurch, in einen Behandlungsraum 104 einmündet im Folgenden wird die Anordnung der Brennerdüse 102 in einem Brennerstein 105 näher betrachtet). Die Brennerdüse 102 ist in einem Brennergehäuse 106 integriert, das fest und zumindest weitgehend gasdicht mit dem Brennerstein 105 verbunden ist.

Die Brennerdüse 102 umfasst einen Brennerkopf 107, der von hier nicht gezeigten Halterungen auf einer Achse 108 koaxial zum Brennergehäuse 106 gehalten wird. Zentral durch den Brennerkopf 107 und das Brennergehäuse 106 hindurch erstreckt sich eine koaxiale Anordnung von mehreren, im Ausführungsbeispiel zwei, Brennstoffzuführungen 109,112, die an ihrem vom Düsenaustritt 110 entgegen gesetzten Ende mit Zuleitungen 115,116 für gasförmigen oder flüssigen Brennstoff verbunden sind. In den Zuleitungen 115, 116 sind in hier nicht gezeigter Weise Armaturen vorgesehen, mittels derer der Zustrom von Brennstoff in den beiden Zuleitungen 115, 116 unabhängig voneinander eingestellt werden kann. Insbesondere kann der Zustrom durch die jeweilige Brennstoffzuführung auch vollständig gesperrt werden. Der Brennerkopf 107 ist axial verschiebbar im Brennergehäuse 106 aufgenommen, wobei die Verschiebung des Brennerkopfs 107 in hier nicht gezeigter Weise entweder mittels einer automatischen Stelleinrichtung, beispielsweise eines Stellmotors, oder manuell, etwa über ein Handstellrad, oder hydraulisch oder pneumatisch, erfolgt.

Am Brennergehäuse 106 ist mit einem Flansch oder einer Verschraubung eine Zuleitung 111 für Oxidationsmittel montiert, mittels der ein Oxidationsmittel, beispielsweise Sauerstoff oder Luft oder eine Mischung aus Sauerstoff und Luft, in den Innenraum 114 des Brennergehäuses 6 eingeleitet wird. Es ist auch vorstellbar, entsprechend dem zuvor beschriebenen Ausführungsbeispiel (Fig. 1, Fig. 2) mehrere Oxidationsmittelzuführungen vorzusehen. Beispielsweise kann eine Zuführung für ein primäres Oxidationsmittel koaxial zu den Brennstoffzuführungen 109, 112 durch den Brennerkopf 107 hindurchgeführt sein, mittels der eine Grundlast an Oxidationsmittel in den Behandlungsraum 104 eingeleitet werden kann.

An seiner zum Düsenaustritt 110 hin weisenden Stirnseite weist der Brennerkopf 107 einen konisch zugeformten Vorderabschnitt 117 auf. Mit gleichem Winkelmaß wie der konische Vorderabschnitt 117 des Brennerkopfs 107 ist der Vorderabschnitt 18 des Brennergehäuses 106 konisch zugeformt. In der in Fig. 3 gezeigten Stellposition ist die Brennerdüse 102 beabstandet vom Vorderabschnitt 118 des Brennergehäuses, wobei sich zwischen dem konischen Vorderabschnitt 117 des Brennerkopfs 107 und dem Vorderabschnitt 118 des Brennergehäuses 106 ein Ringspalt 120 erstreckt, mit dem Innenraum 114 des Brennergehäuses 106 strömungsverbunden ist.

Durch axiale Verschiebung des Brennerkopfes 107 kann der Strömungsquerschnitt des Ringspaltes 120 verstellt werden. So ist in der in Fig. 2 gezeigten Stellposition der Brennerkopf 107 mit seinem konischen Vorderabschnitt 117 in den Vorderabschnitt 118 des Brennergehäuses 106 hinein verfahren, und der Ringspalt 120 ist geschlossen. In dieser Stellposition erfolgt somit keine Zuführung von Oxidationsmittel in den Behandlungsraum 104. Es kann jedoch auch eine weitere, hier nicht gezeigte Oxidationsmittelzuführung vorgesehen sein, mittels der eine gewisse Menge an Oxidationsmittel zur Bewältigung einer Grundlast der Verbrennung in den Behandlungsraum eingebracht werden kann.

Bei Verwendung einer automatischen Stellvorrichtung des Brennerkopfes 107 kann dieser auch mit einer hier nicht gezeigten Regelautomatik in Datenverbindung stehen, die den Vorschub des Brennerkopfes 107 in Abhängigkeit von bestimmten gemessenen Parametern regelt, beispielsweise der Temperatur oder der Konzentration von bestimmten Gasen im Behandlungsraum 104, dem Sauerstoffanteil im Oxidationsmittel oder dem Zustand eines im Behandlungsraum 104 vorliegenden Behandlungsguts.

Beim Betrieb des Brenners 101 wird über die Brennstoffzuführungen 109, 112 ein flüssiger oder gasförmiger Brennstoff, beispielsweise Erdgas, in den Behandlungsraum 104 eingeleitet. Je nach Bedarf erfolgt die Zuführung von Brennstoff entweder nur über eine der Brennstoffzuleitungen 109,112 oder über beide. Ist der Strömungsquerschnitt der Brennstoffzuleitungen 109,112 unterschiedlich, kann die zuzuführende Menge an Brennstoff auch durch die Wahl der jeweils mit Brennstoff beschickten Brennstoffzuführung 109,112 variiert werden. Ist beispielsweise zu Beginn eines Brennvorgangs eine hohe Leistung des Brenners 101 erwünscht, wird der Brennstoff durch beide Brennstoffzuführungen 199, 112 eingeleitet. Zugleich ist der Brennerkopf 107 so verfahren, dass der Ringspalt 120 seinen maximalen Strömungsquerschnitt aufweist, sodass eine große Mange an Oxidationsmittel in den Behandlungsraum 104 eingebracht wird. Bei hohen Leistungen ist das eingesetzte Oxidationsmittel vorzugsweise reiner Sauerstoff oder mit Sauerstoff angereicherte Luft.

Wird im Verlauf der Behandlung die Leistungsanforderung geringer, erfolgt die Brennstoffzufuhr nur durch eine der Brennstoffzuführungen 109, 112, wobei der Brennstoffstrom durch diese eine Brennstoffzuführung, und damit die Ausströmgeschwindigkeit, nicht notwendigerweise geändert wird. Zugleich wird der Ringspalt 120 verengt, um den Oxidationsmittelzustrom zu verringern. Es ist auch möglich, den Ringspalt unverändert zu lassen und den Sauerstoffanteil des Oxidationsmittels zu verringern. Durch diese Vorgehensweise werden im Innern des Behandlungsraumes 104 gleichmäßig stabile Verbrennungsverhältnisse gewährleistet.

Der Brenner 101 ist besonders auch zum Einsatz bei flammenloser Verbrennung im Behandlungsraum 104 geeignet. Die flammenlose Verbrennung im Behandlungsraum führt zu einer Erniedrigung der Temperaturen im Bereich des Düsenaustritts 110 und insgesamt zu einer Erniedrigung der NOₓ-Werte im Abgas. Hierzu kann die Zuleitung 111 für das Oxidationsmittel über eine weitere, hier nicht gezeigte Leitung mit dem Behandlungsraum 104 in Strömungsverbindung stehen, so dass während der Behandlung laufend Abgas aus dem Behandlungsraum 104 entnommen und über die Zuleitung 111 wieder in den Behandlungsraum 104 eingespeist werden kann (so genannte "äußere Rezirkulation").

Der erfindungsgemäße Brenner und das erfindungsgemäße Verfahren kann sowohl für Herdöfen als auch für Drehtrommelöfen eingesetzt werden und ist insbesondere zum Schmelzen von Nichteisenmetallen oder Glas aber auch für Erwärmungsöfen jeglicher Art geeignet. Ohne die Flammenstabilität zu beeinträchtigen, kann der Sauerstoffanteil im Oxidationsmittel zwischen 20 Vol-% und 100 Vol-% variiert werden. Er vereint die positiven Eigenschaften von Luftbrennern mit denen reiner Sauerstoffbrenner inklusive der Möglichkeit zur flammenlosen Verbrennung und ist einfach in bestehende Öfen einzubauen. Seine Bauweise macht ihn besonders robust und wartungsarm. Insbesondere in der Metallindustrie werden mit dem erfindungsgemäßen Brenner eine höhere Produktivität, geringere Energieverbräuche und flexiblere Arbeitsweisen bei gleichzeitig deutlich geringeren Schadstoffemissionen ermöglicht.

### Bezugszeichenliste

- 1.: Brenner
- 2.: Brennerdüse
- 3.: Öffnung
- 4.: Behandlungsraum
- 5.: Brennerstein
- 6.: Brennergehäuse
- 7.: Brennerkopf
- 8.: Achse
- 9.: Brennstoffzuführung
- 10.: Düsenaustritt
- 11.: Zuführung für primäres Oxidationsmittel
- 12.: -
- 13.: Stirnseite
- 14.: Innenraum
- 15.: Zuleitung für Sauerstoff
- 16.: Zuleitung für Luft
- 17.: konischer Vorderabschnitt
- 18.: konische Ausnehmung
- 19.: -
- 20.: Ringspalt

- 101.: Brenner
- 102.: Brennerdüse
- 103.: Mündung
- 104.: Behandlungsraum
- 105.: Brennerstein
- 106.: Brennergehäuse
- 107.: Brennerkopf
- 108.: Achse
- 109.: Primäre Brennstoffzuführung
- 110.: Düsenaustritt
- 111.: Zuführung für Oxidationsmittel
- 112.: Sekundäre Brennstoffzuführung
- 113.: Stirnseite
- 114.: Innenraum
- 115.: Zuleitung für primären Brennstoff
- 116.: Zuleitung für sekundären Brennstoff
- 117.: konischer Vorderabschnitt
- 118.: Vorderabschnitt (des Brennergehäuses)
- 119.: -
- 120.: Ringspalt

## Patentansprüche

1. Brenner mit einer in seinem bestimmungsgemäßen Einbauzustand durch eine Öffnung (3) einer Brenneraufnahme (5) hindurch in einen Behandlungsraum (4) einmündenden Brennerdüse (2), die mit wenigstens einer Brennstoffzuführung (9) und wenigstens einer Zuführung (11, 20) für ein Oxidationsmittel ausgerüstet ist, wobei die wenigstens eine Zuführung (11, 20) für das Oxidationsmittel mit Mitteln (17, 18) zum Verändern des Strömungsquerschnitts der Zuführung (11, 20) ausgerüstet ist,
wobei
die Brennerdüse (2) mit wenigstens einer Zuführung (11) für primäres Oxidationsmittel und wenigstens einer Zuführung (20) für ein sekundäres Oxidationsmittel ausgerüstet ist, wobei zumindest die Zuführung (20) für sekundäres Oxidationsmittel mit den Mitteln (17,18) zum Verändern des Strömungsquerschnitts ausgerüstet ist, wobei die Zuführung (11) für primäres Oxidationsmittel und/oder die Zuführung (20) für sekundäres Oxidationsmittel mit einer Zuleitung (15) für Sauerstoff und mit einer Zuleitung (16) für Luft strömungsverbunden ist/sind,
wobei die Brennerdüse (2) axial verschiebbar gegenüber der Brenneraufnahme (5) ausgebildet ist, und durch einen mit der axialen Bewegung der Brennerdüse (2) wirkverbundenen Schließmechanismus die wenigstens eine Zuführung (20) für sekundäres Oxidationsmittel geöffnet und/oder geschlossen werden kann.

2. Brenner nach Anspruch 1, **dadurch gekennzeichnet, dass** die Zuführung (11,20) für sekundäres Oxidationsmittel mit Mitteln zum kontinuierlichen Verändern des Strömungsquerschnitts ausgerüstet ist.

3. Brenner nach Anspruch 1, **dadurch gekennzeichnet, dass** die Brennerdüse (2) mit einem Brennerkopf (7) ausgerüstet ist, der an einer Seite konisch zugeformt ist und mit einer konischen Ausnehmung (18) der Brenneraufnahme (5) derart korrespondiert, dass sich bei axialer Verschiebung der Brennerdüse (2) zwischen Brennerkopf (7) und der Ausnehmung (18) der Brenneraufnahme (5) ein Ringspalt (20) öffnet, erweitert und/oder schließt.

4. Brenner nach Anspruch 3, **dadurch gekennzeichnet, dass** der Ringspalt (20) in den Strömungsweg der Zuführung (20) für sekundäres Oxidationsmittel integriert ist.

5. Brenner nach einem der vorhergehenden Ansprüche, **dadurch gekennzeichnet, dass** die Zuleitung (15) für Sauerstoff und die Luftzuleitung (16) in eine Mischkammer (14) einmünden, die mit der Zuführung (11) für primäres Oxidationsmittel und/oder mit der Zuführung (20) für sekundäres Oxidationsmittel strömungsverbunden ist.

6. Brenner nach einem der vorhergehenden Ansprüche, **dadurch gekennzeichnet, dass** wenigstens zwei Brennstoffzuführungen vorgesehen sind, die mit unabhängig voneinander ansteuerbaren Brennstoff-Zuleitungen strömungsverbunden sind

7. Brenner nach Anspruch 6, **dadurch gekennzeichnet, dass** die Brennstoffzuführungen unterschiedliche Strömungsquerschnitte aufweisen.

8. Brenner nach einem der vorhergehenden Ansprüche, **dadurch gekennzeichnet, dass** den Zuleitungen (9) für Brennstoff und/oder den Mitteln (17, 18) zum Verändern des Strömungsquerschnitts der Zuführungen (11, 20) für Oxidationsmittel eine Regelungsautomatik zugeordnet ist, mittels der die Zufuhr von Luft und/oder Sauerstoff sowie Brennstoff in Abhängigkeit von physikalischen Parametern im Behandlungsraum (4), wie Temperatur, Sauerstoffgehalt, etc. einstellbar ist.

9. Verfahren zum Betreiben eines Brenners nach einem der vorhergehenden Ansprüche, bei dem ein Brennstoff durch die Brennstoffzuführung (9) und das Oxidationsmittel durch die wenigstens eine Zuführung (11,20) für Oxidationsmittel hindurch in den Behandlungsraum (4) eingebracht wird, wobei
als Oxidationsmittel Sauerstoff und Luft in einem während des Einleitens sich veränderndem Verhältnis eingesetzt wird, die zu einem Gasgemisch vermischt werden, das in die wenigstens eine Zuführung (11, 20) für Oxidationsmittel eingeleitet wird, wobei in Abhängigkeit von dem Verhältnis aus Luft und Sauerstoff die Menge des in den Behandlungsraum (4) eingeleiteten Oxidationsmittels durch kontinuierliche oder diskontinuierliche Änderung des freien Strömungsquerschnitts der Zuführung (11, 20) für sekundäres Oxidationsmittel geändert wird.

10. Verfahren nach Anspruch 9, **dadurch gekennzeichnet, dass** der Brennstoff durch eine erste und wenigstens eine zweite Brennstoffzuführung zugeführt wird und dass Parameter der sich im Behandlungsraum (4) ausbildenden Flamme, wie Flammengeometrie und Temperatur im Behandlungsraum, dadurch verändert werden, dass durch Ansteuern der Brennstoffzuleitungen (9) die Menge des zugeführten Brennstoffs geändert wird.

11. Verfahren nach Anspruch 9 oder 10, **dadurch gekennzeichnet, dass** durch Verändern der Austrittsgeschwindigkeiten des Oxidationsmittels und/oder des Brennstoffs die Flammengeometrie beeinflusst wird.

12. Verfahren nach einem der Ansprüche 9 bis 11, **dadurch gekennzeichnet, dass** im Behandlungsraum (4) eine flammenlose oder gestufte Verbrennung erfolgt.

## Claims

1. Burner having a burner nozzle (2) which, in its properly installed state, opens through an opening (3) of a burner housing (5) into a process space (4) and is equipped with at least one fuel supply (9) and at least one supply (11, 20) for an oxidant, wherein the at least one supply (11, 20) for the oxidant is equipped with means (17, 18) for changing the flow cross section of the supply (11, 20),
wherein the burner nozzle (2) is equipped with at least one supply (11) for primary oxidant and at least one supply (20) for a secondary oxidant, wherein at least the supply (20) for secondary oxidant is equipped with the means (17, 18) for changing the flow cross section, wherein
the supply (11) for primary oxidant and/or the supply (20) for secondary oxidant is/are fluidically connected to a feed line (15) for oxygen and to a feed line (16) for air,
wherein the burner nozzle (2) is axially displaceable with respect to the burner housing (5), and
a closing mechanism that is operatively connected to the axial movement of the burner nozzle (2) makes it possible to open and/or close the at least one supply (20) for secondary oxidant.

2. Burner according to Claim 1, **characterized in that** the supply (11, 20) for secondary oxidant is equipped with means for continuously changing the flow cross section.

3. Burner according to Claim 1, **characterized in that** the burner nozzle (2) is equipped with a burner head (7) which is conical on one side and corresponds to a conical recess (18) of the burner housing (5) such that, when the burner nozzle (2) is displaced axially between the burner head (7) and the recess (18) of the burner housing (5), an annular gap (20) opens, widens and/or closes.

4. Burner according to Claim 3, **characterized in that** the annular gap (20) is integrated into the flow path of the supply (20) for secondary oxidant.

5. Burner according to one of the preceding claims, **characterized in that** the feed line (15) for oxygen and the air feed line (16) open into a mixing chamber (14) that is fluidically connected to the supply (11) for primary oxidant and/or to the supply (20) for secondary oxidant.

6. Burner according to one of the preceding claims, **characterized in that** there are provided at least two fuel supplies which are fluidically connected to fuel feed lines that can be controlled independently of one another.

7. Burner according to Claim 6, **characterized in that** the fuel supplies have different flow cross sections.

8. Burner according to one of the preceding claims, **characterized in that** an automated control system is assigned to the feed lines (9) for fuel and/or the means (17, 18) for changing the flow cross section of the supplies (11, 20) for oxidant, by means of which system it is possible to set the supply of air and/or oxygen and fuel in dependence on physical parameters in the process space (4) such as temperature, oxygen levels, etc.

9. Method for operating a burner according to one of the preceding claims, in which a fuel is introduced via the fuel supply (9), and the oxidant is introduced via the at least one supply (11, 20) for oxidant, into the process space (4)
wherein
as oxidant, use is made of oxygen and air in a ratio that changes during the introduction, these being mixed to form a gas mixture that is introduced into the at least one supply (11, 20) for oxidant, wherein the quantity of oxidant introduced into the process space (4) is changed, depending on the ratio of air to oxygen, by continuously or discontinuously changing the free flow cross section of the supply (11, 20) for secondary oxidant.

10. Method according to Claim 9, **characterized in that** the fuel is supplied via a first and at least a second fuel supply, and **in that** parameters of the flame forming in the process space (4), such as flame geometry and temperature in the process space, are changed by changing the quantity of supplied fuel by controlling the fuel feed lines (9).

11. Method according to Claim 9 or 10, **characterized in that** the flame geometry is influenced by changing the outlet speeds of the oxidant and/or of the fuel.

12. Method according to one of Claims 9 to 11, **characterized in that** flameless or stepped combustion takes place in the process space (4).

## Revendications

1. Brûleur comprenant une buse de brûleur (2) débouchant dans un espace de traitement (4) dans son état installé de manière conforme à travers une ouverture (3) d'un logement de brûleur (5), laquelle est munie d'au moins une alimentation en combustible (9) et d'au moins une alimentation (11, 20) pour un agent oxydant, l'au moins une alimentation (11, 20) pour l'agent oxydant étant munie de moyens (17, 18) pour modifier la section transversale d'écoulement de l'alimentation (11, 20),
la buse de brûleur (2) étant munie d'au moins une alimentation (11) pour un agent oxydant primaire et d'au moins une alimentation (20) pour un agent oxydant secondaire, au moins l'alimentation (20) pour l'agent oxydant secondaire étant munie des moyens (17, 18) pour modifier la section transversale d'écoulement, l'alimentation (11) pour l'agent oxydant primaire et/ou l'alimentation (20) pour l'agent oxydant secondaire étant en liaison fluidique avec une conduite d'alimentation (15) pour de l'oxygène et avec une conduite d'alimentation pour de l'air, (16), la buse de brûleur (2) étant réalisée de manière déplaçable axialement par rapport au logement de brûleur (5), et l'au moins une alimentation (20) pour l'agent oxydant secondaire pouvant être ouverte et/ou fermée par un mécanisme de fermeture en liaison fonctionnelle avec le déplacement axial de la buse de brûleur (2).

2. Brûleur selon la revendication 1, **caractérisé en ce que** l'alimentation (11, 20) pour un agent oxydant secondaire est munie de moyens pour modifier de manière continue la section transversale d'écoulement.

3. Brûleur selon la revendication 1, **caractérisé en ce que** la buse de brûleur (2) est munie d'une tête de brûleur (7) qui présente une forme conique au niveau d'un côté et qui correspond à un évidement conique (18) du logement de brûleur (5), de telle sorte que lors d'un déplacement axial de la buse de brûleur (2) entre la tête de brûleur (7) et l'évidement (18) du logement de brûleur (5), une fente annulaire (20) s'ouvre, s'élargisse et/ou se ferme.

4. Brûleur selon la revendication 3, **caractérisé en ce que** la fente annulaire (20) est intégrée dans la voie d'écoulement de l'alimentation (20) pour l'agent oxydant secondaire.

5. Brûleur selon l'une quelconque des revendications précédentes, **caractérisé en ce que** la conduite d'alimentation (15) en oxygène et la conduite d'alimentation en air (16) débouchent dans une chambre de mélange (14) qui est en liaison d'écoulement avec la conduite d'alimentation (11) pour l'agent oxydant primaire et/ou avec la conduite d'alimentation (20) pour l'agent oxydant secondaire.

6. Brûleur selon l'une quelconque des revendications précédentes, **caractérisé en ce qu'**au moins deux alimentations en combustible sont prévues, lesquelles sont en liaison fluidique avec des conduites d'alimentation en combustible pouvant être commandées indépendamment l'une de l'autre.

7. Brûleur selon la revendication 6, **caractérisé en ce que** les conduites d'alimentation en combustible présentent des sections transversales d'écoulement différentes.

8. Brûleur selon l'une quelconque des revendications précédentes, **caractérisé en ce qu'**un automatisme de régulation est associé aux conduites d'alimentation (9) en combustible et/ou aux moyens (17, 18) pour modifier la section transversale d'écoulement des alimentations (11, 20) en agent oxydant, au moyen duquel automatisme de régulation l'alimentation en air et/ou en oxygène ainsi qu'en combustible peut être ajustée en fonction de paramètres physiques dans l'espace de traitement (4), tels que la température, la teneur en oxygène, etc.

9. Procédé pour faire fonctionner un brûleur selon l'une quelconque des revendications précédentes, dans lequel un combustible est introduit à travers l'alimentation en combustible (9) et l'agent oxydant est introduit à travers l'au moins une alimentation (11, 20) pour agent oxydant dans l'espace de traitement (4),
de l'oxygène et de l'air étant utilisés en tant qu'agent oxydant dans un rapport variable pendant l'introduction, lesquels sont mélangés pour produire un mélange de gaz qui est introduit dans l'au moins une alimentation (11, 20) en agent oxydant, la quantité d'agent oxydant introduite dans l'espace de traitement (4) étant modifiée en fonction du rapport d'air et d'oxygène par modification continue ou discontinue de la section transversale d'écoulement libre de l'alimentation (11, 20) en agent oxydant secondaire.

10. Procédé selon la revendication 9, **caractérisé en ce que** le combustible est acheminé à travers une première et au moins une deuxième alimentation en combustible et **en ce que** des paramètres de la flamme se formant dans l'espace de traitement (4), tels que la géométrie de la flamme et la température dans l'espace de traitement, sont modifiés par le fait que la quantité de combustible acheminée est modifiée par commande des conduites d'alimentation en combustible (9).

11. Procédé selon la revendication 9 ou 10, **caractérisé en ce que** la géométrie de la flamme est influencée par modification des vitesses de sortie de l'agent oxydant et/ou du combustible.

12. Procédé selon l'une quelconque des revendications 9 à 11, **caractérisé en ce que** dans l'espace de traitement (4) se produit une combustion sans flamme ou étagée.
